# EUROPEAN PATENT APPLICATION

(11) **EP 2 144 216 A1**
(43) Date of publication of application: **13.01.2010**
(21) Application number: 08739629.7
(22) Date of filing: 26.03.2008
(51) Int. Cl.: G08G 1/16, B60R 1/00, H04N 7/18

(54) **IMAGING SYSTEM**

(30) Priority: 28.03.2007 JP 2007085221
(71) Applicant: Toyota Jidosha Kabushiki Kaisha, Toyota-shi, Aichi 471-8571 (JP)
(72) Inventor: HASEGAWA, Hiroshi, Hino-shi Tokyo 191-8660 (JP)
(74) Representative: Albutt, Anthony John
(86) International application number: PCT/JP2008/056516
(87) International publication number: WO 2008/123532

(57) **Abstract**

The object of the present invention is to provide an imaging system which can appropriately detect an object to be detected by carrying out a detection process for the object according to a running state of a vehicle. The imaging system, which takes an image of surroundings of the vehicle with a camera and detects the object to be detected by pattern matching within the taken image, carries out pattern matching from a farther side within the image when the vehicle speed exceeds a predetermined value than when not. This can rapidly detect far objects to be detected when the vehicle speed is increased, thereby appropriately detecting objects which are of higher necessity in the driving of the vehicle according to the vehicle speed.

## Description

### Technical Field

The present invention relates to an imaging system for taking an image of surroundings of a vehicle.

### Background Art

Conventionally known as an example of imaging systems for capturing images of surroundings of a vehicle is an apparatus which captures an image in front of the vehicle with a camera mounted to the vehicle and detects pedestrians within the captured image as described in Japanese Patent Application Laid-Open No. 2002-99997. The apparatus aims to detect the pedestrians by pattern-matching an area of the captured image with a preset template.

### Disclosure of Invention

However, such an apparatus is problematic in that it may fail to appropriately detect pedestrians according to the running state of the vehicle. For example, in the case of pattern matching with a plurality of templates ranging from one having a larger image size on the near side to one having a smaller image size on the far side, sequentially pattern-matching in a fixed order from the near-side template regardless of the vehicle speed will preferentially detect pedestrians in the vicinity who are less necessary in the driving of the vehicle running at a high speed. Since very near pedestrians are visible to the naked eye, it is desirable to preferentially detect far pedestrians in this case.

For solving such a problem, it is an object of the present invention to provide an imaging system which can appropriately detect an object to be detected by carrying out a detection process for the object according to the running state of the vehicle.

That is, the imaging system in accordance with the present invention comprises an imaging device for taking an image of surroundings of a vehicle and a detection unit for detecting an object to be detected within the image taken by the imaging device by pattern matching, the detection unit carrying out the pattern matching from a farther side within the image when a vehicle speed exceeds a predetermined value than when not.

By carrying out pattern matching from the farther side within the image when the vehicle speed exceeds a predetermined value than when not, the present invention can rapidly detect far objects to be detected when the vehicle speed is increased, thereby appropriately detecting objects which are of higher necessity in the driving of the vehicle according to the vehicle speed.

Preferably, in the imaging system in accordance with the present invention, the detection unit carries out the pattern matching by using a plurality of templates, the detection unit carrying out the pattern matching by using a far-side template for detecting a far side earlier when the vehicle speed exceeds the predetermined value than when not.

Preferably, in the imaging system in accordance with the present invention, the detection unit detects the object to be detected by pattern-matching a nearer side when the vehicle runs a curve than when not.

By detecting the object to be detected by pattern-matching the nearer side when the vehicle runs a curve, the present invention can rapidly detect an area in the vicinity of the vehicle.

Preferably, the imaging system in accordance with the present invention is used for a vision aid system for aiding the vision of the driver when the vehicle runs at night.

By carrying out a detection process for the object to be detected according to the running state of the vehicle, the present invention can appropriately detect the object.

### Brief Description of Drawings

Fig. 1 is a schematic configuration diagram of the imaging system in accordance with an embodiment of the present invention;
Fig. 2 is a flowchart illustrating operations of the imaging system of Fig. 1;
Fig. 3 is an explanatory view of pattern matching in the imaging system of Fig. 1;
Fig. 4 is an explanatory view of pattern matching using templates in the imaging system of Fig. 1;
Fig. 5 is an explanatory view of pattern matching using templates in the imaging system of Fig. 1;
Fig. 6 is an explanatory view of pattern matching using templates in the imaging system of Fig. 1; and
Fig. 7 is an explanatory view of pattern matching using templates in the imaging system of Fig. 1.

### Description of Embodiments

In the following, an embodiment of the present invention will be explained in detail with reference to the accompanying drawings. In the explanation of the drawings, the same constituents will be referred to with the same signs while omitting their overlapping descriptions.

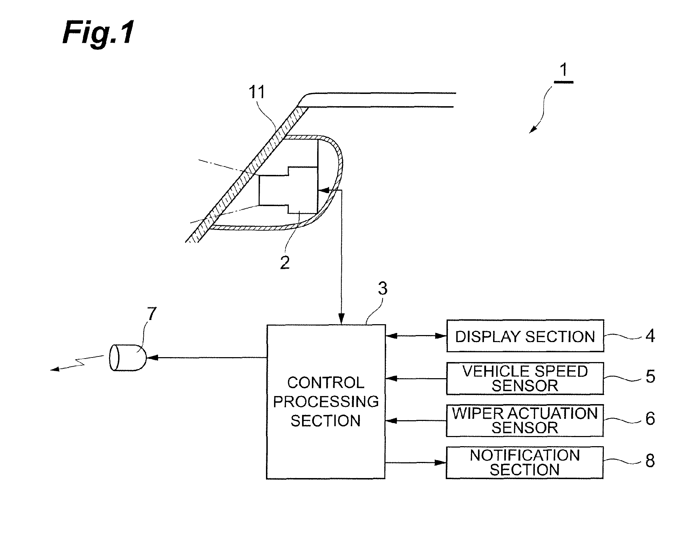

Fig. 1 is a schematic configuration diagram of the imaging system in accordance with this embodiment.

As illustrated in Fig. 1, the imaging system 1 in accordance with this embodiment, which is a system for taking an image of surroundings of a vehicle, is employed in a vision aid system for aiding the vision of the driver when the vehicle runs at night. The imaging system 1 comprises a camera 2 and a control processing section 3. The camera 2, for which a CCD (Charge-Coupled Device) camera, for example, is used, functions as an imaging device for taking an image of surroundings of the vehicle. As the camera 2, one sensitive to near-infrared light is employed. Arranging a visible light cut filter in a taking optical system, for example, makes it possible to take images with a near-infrared component and thereabout. For example, the camera 2 is placed such as to be able to take an image in front of the vehicle through a windshield 11 of the vehicle.

The control processing section 3 is connected to the camera 2. The control processing section 3, which carries out a process for controlling the whole system, is constituted by a CPU, a ROM, a RAM, an input signal circuit, an output signal circuit, a power circuit, and the like. The control processing section 3 also functions as a detection unit for inputting the image taken by the camera 2 and detecting pedestrians within the taken image by pattern matching with a plurality of templates. The control processing section 3 stores a plurality of templates for detecting pedestrians. Stored as the plurality of templates are those with different image sizes ranging from one on the near side to one on the far side of the vehicle.

The imaging system 1 is provided with a display section 4. The display section 4, for which a liquid crystal panel or a device for projecting the image onto the windshield 11, for example, is used, is connected to the control processing section 3 and functions as display means for displaying the image taken by the camera 2. The imaging system 1 is also provided with a vehicle speed sensor 5. The vehicle speed sensor 5, for which a wheel speed sensor, for example, is used, functions as vehicle speed detection means for detecting the vehicle speed. Signals detected by the vehicle speed sensor are fed into the control processing section 3.

The imaging system 1 is also provided with a wiper actuation sensor 6. The wiper actuation sensor 6 functions as rain detection means for detecting whether it is raining or not. Signals detected by the wiper actuation sensor 6 are fed into the control processing section 3. Instead of the wiper actuation sensor 6, others such as raindrop sensors may be used as long as they can detect whether it is raining or not, or those which can acquire raining information may be employed.

The imaging system 1 is also provided with a near infrared light projector 7. The near infrared light projector 7 is light-projecting means for projecting near-infrared rays in front of the vehicle, while its light projection is controlled in response to a signal from the control processing section 3. The near infrared light projector 7 is constructed, for example, such as to be able to project the near-infrared light in an irradiation range corresponding to a high beam of a headlight.

The imaging system 1 is also provided with a notification section 8. The notification section 8 is notification means for notifying the driver of the vehicle to pay attention when a pedestrian is detected within the image taken by the camera 2 or when it is necessary to pay attention to the detected pedestrian. For the notification section 8, anything can be used as long as it can notify the driver that there is a pedestrian. Examples include those notifying through auditory senses such as voices and alarm sounds, those notifying through visual senses such as liquid crystal displays, lamp displays, and LED displays, and those notifying through tactile senses such as vibrations.

Operations of the imaging system in accordance with this embodiment will now be explained.

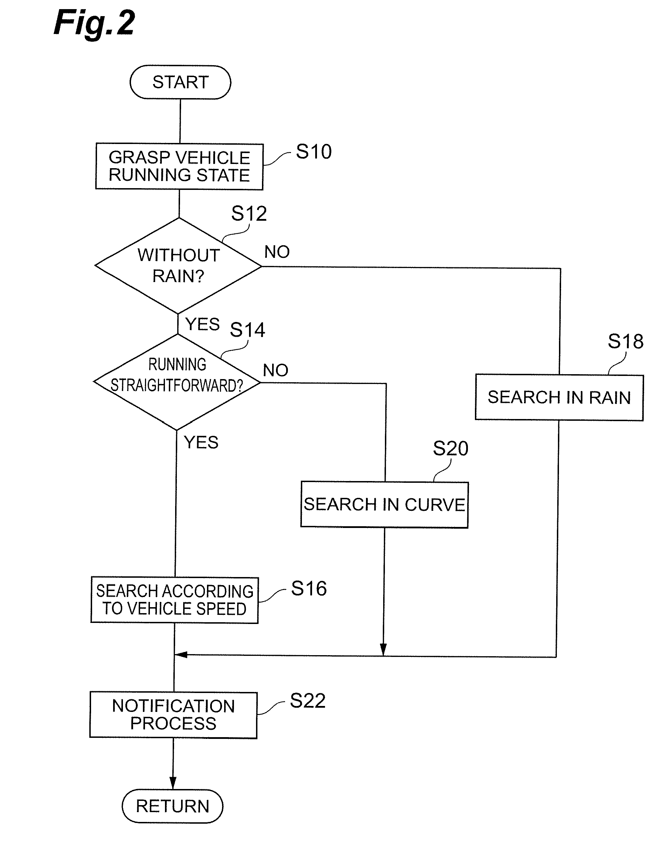

Fig. 2 is a flowchart illustrating operations of the imaging system in accordance with this embodiment. A series of control processes in Fig. 2 are repeatedly executed by the control processing section 3 at predetermined intervals, for example.

First, as illustrated at S10 in Fig. 2, a vehicle running state grasping process is carried out. The vehicle running state grasping process is a process for grasping a vehicle speed state, a running environment state, a state of straightforwardness of a running road, and the like. For example, the vehicle speed state, weather state, and state of straightforwardness of the running road are grasped by reading a signal detected by the vehicle speed sensor 5, a signal detected by the wiper actuation sensor 6, and steeling information of a steering wheel or information from a navigation system, respectively.

Then, the flow shifts to S12, where it is determined whether it is raining or not. When it is determined at S12 that it is not raining, it is determined whether the vehicle runs straightforward or not (S14). When it is determined at S14 that the vehicle runs straightforward, a searching process corresponding to the vehicle speed is carried out (S16). This process is one for detecting pedestrians within a taken image while changing the order of using templates according to the vehicle speed.

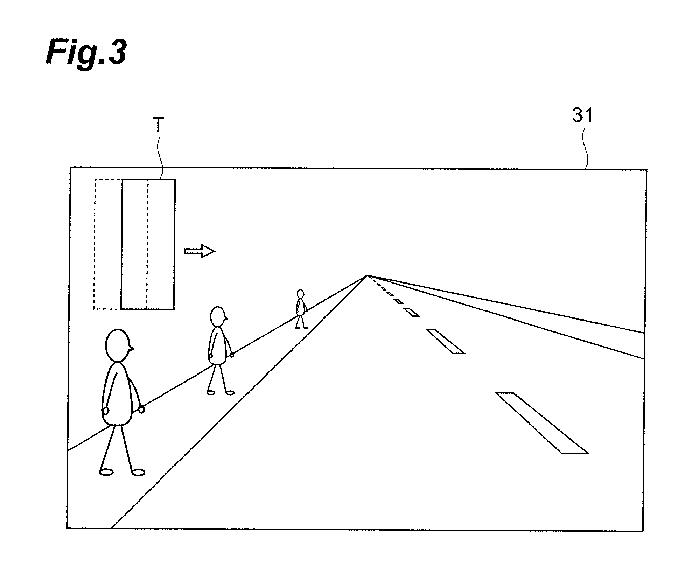

When detecting pedestrians by placing a template T on a taken image 31 and sequentially moving its position within the image 31 as illustrated in Fig. 3, pattern matching is carried out while changing a template to be used earlier according to the vehicle speed.

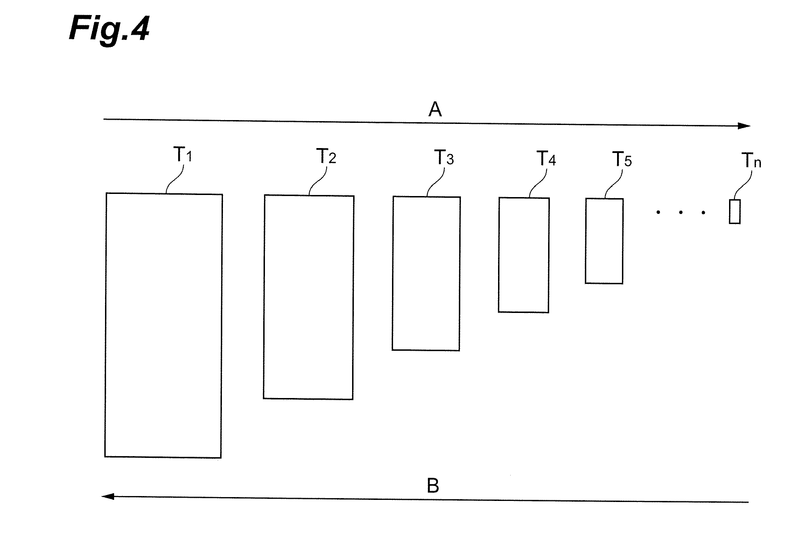

When there are a plurality of templates T1 to Tn with different sizes as illustrated in Fig. 4, for example, template matching is initially carried out with the template T1 having a larger size on the near side and sequentially with the templates T2, T3, ..., Tn decreasing their sizes in this order toward the far side as a usual detection (see arrow A in Fig. 4). This can rapidly detect pedestrians in the vicinity of the vehicle, thereby enhancing safety in driving the vehicle.

When the state of running at a vehicle speed not lower than a predetermined value continues for a predetermined time or longer, i.e., in the case of stable straightforward running, the order of using templates is in the reverse of the usual one, so that template matching is initially carried out with the template Tn on the far side and sequentially with the templates T5, T4, T3, T2, T1 increasing their sizes in this order from the far side (see arrow B in Fig. 4). This can preferentially detect far pedestrians when the vehicle speed is high. Here, pedestrians in the vicinity of the vehicle have already been detected when they were far and are visible with the naked eye, thus leaving no problems even when not preferentially detected.

As the pattern matching in this searching process, for example, the degree of similarity (correlation) between an image area where a template is placed on the image 31 and the template is calculated, and it is detected that there is a pedestrian when the degree of similarity is not lower than a predetermined value. Other techniques may be used as a pattern matching technique.

As a searching process according to the vehicle speed at S16, pattern matching may be carried out with a template on the farther side as the vehicle speed is higher.

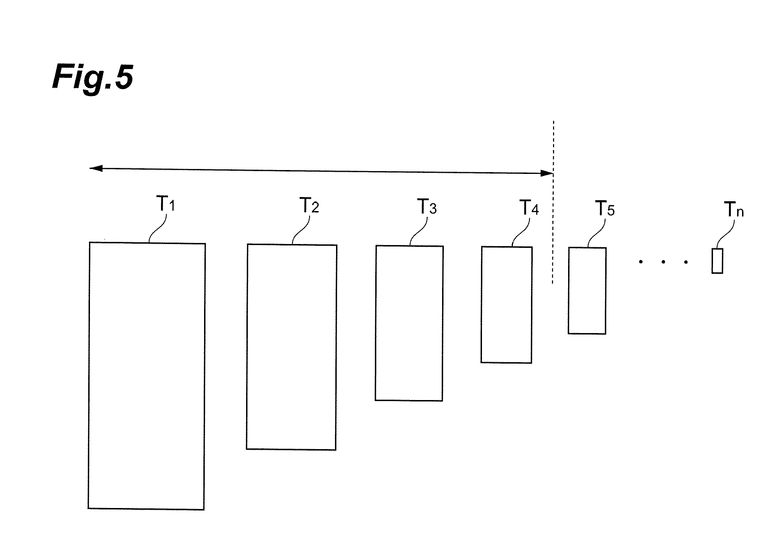

At a low vehicle speed not exceeding a predetermined value v1, for example, pattern matching is carried out with the templates T1 to T4 on the near side and at intermediate positions without the template T5 on the far side and the like as illustrated in Fig. 5.

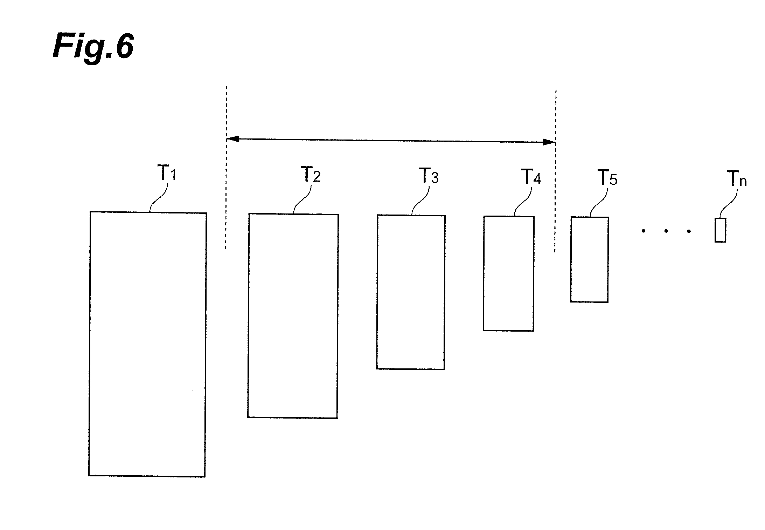

At a middle vehicle speed exceeding the predetermined value v1 but not more than a predetermined value v2, pattern matching is carried out with the templates T2 to T4 at intermediate positions without the template T1 on the near side, the template T5 on the far side, and the like as illustrated in Fig. 6.

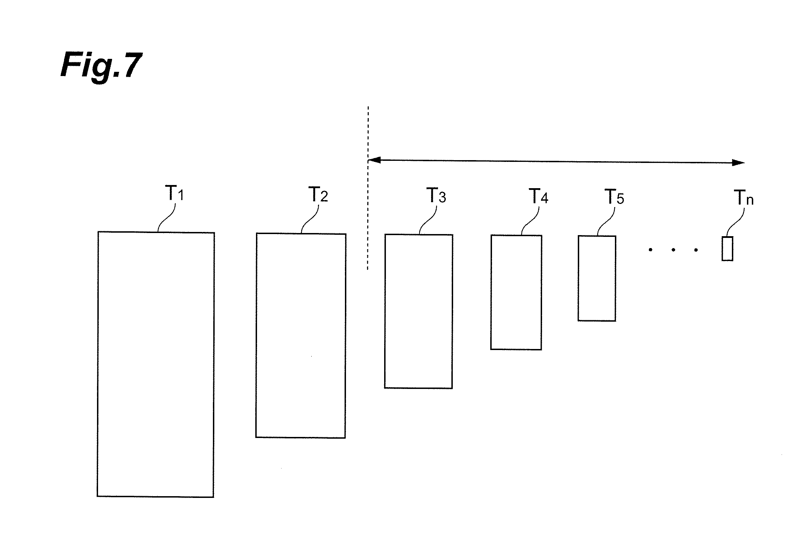

At a high vehicle speed exceeding the predetermined value v2, pattern matching is carried out with the templates T3 to Tn at intermediate positions and on the far side without the templates T1, T2 on the near side as illustrated in Fig. 7.

Thus carrying out the searching process can reduce the number of templates used for the searching process, whereby the searching process required for driving the vehicle can be performed rapidly.

After completing the searching process according to the vehicle speed at S16, the flow shifts to S22. Meanwhile, when it is determined at S12 that it is raining, a searching process in the rain is carried out. The searching process in the rain is a process for detecting pedestrians within the image by carrying out pattern matching on the farther side than the searching process without rain. For example, pattern matching is carried out with the templates T2 to Tn without the template T1 on the near side among the plurality of templates T1 to Tn illustrated in Fig. 4. This can preferentially detect pedestrians on the far side when it rains.

When it is determined at S14 in Fig. 2 that the vehicle does not run straightforward, a searching process at the time of running a curve is carried out. The searching process at the time of running a curve is a process for detecting pedestrians within the image by carrying out pattern matching on the nearer side than the searching process at the time of running no curve. For example, pattern matching is carried out with the templates T1 to T4 without the templates T5 to Tn on the far side among the plurality of templates T1 to Tn illustrated in Fig. 4. This can preferentially detect pedestrians in areas near the vehicle when running a curve.

Then, the flow shifts to S22, where a notification process is carried out. The notification process is a process for notifying the driver of the vehicle that a pedestrian is detected at S16, S 18, or S20 or a pedestrian is detected and in a dangerous state if any. This notification process is carried out through the notification section 8, so as to notify that there is a pedestrian in front, for example, through auditory senses by voices, alarm sounds, and the like and through visual senses by liquid crystal displays, lamp displays, LED displays, and the like. After completing the notification process at S22, the series of control processes is terminated.

As in the foregoing, by carrying out pattern matching from the farther side within the image when the vehicle speed exceeds a predetermined value than when not, the imaging system in accordance with this embodiment can rapidly detect far objects to be detected when the vehicle speed is increased, thereby appropriately detecting objects which are of higher necessity in the driving of the vehicle according to the vehicle speed.

By carrying out pattern matching with a template on the farther side as the vehicle speed is higher, the imaging system in accordance with this embodiment can reduce the number of templates used for detection, while appropriately detecting objects to be detected which are of higher necessity in the driving of the vehicle according to the vehicle speed. This can reduce the amount of processing necessary for the detection, and thus can rapidly detect pedestrians. Therefore, the existence of a pedestrian can be notified at an earlier timing. Since no unnecessary detections are carried out, no vexations with unnecessary notifications occur. For example, it can reduce vexatious notifications concerning pedestrians passing the far side at the time of low-speed running. Since the amount of detection processing can be reduced, the accuracy in detection can also be improved.

By detecting objects to be detected by preferentially pattern-matching the near side at the time of running a curve, the imaging system in accordance with this embodiment can rapidly detect areas in the vicinity of the vehicle.

By detecting objects to be detected by preferentially pattern-matching the far side when running in the rain, the imaging system in accordance with this embodiment can preferentially detect far areas when it rains, thereby enhancing the safety in driving the vehicle.

The embodiment explained in the foregoing represents an example of the imaging system in accordance with the present invention. Therefore, the imaging system in accordance with the present invention is not limited to such, but may be any of those modifying the imaging system in accordance with this embodiment or applied to others without altering the gist set forth in each claim.

For example, though this embodiment explains a case applied to a vision aid system for aiding the vision of the driver when the vehicle runs at night, it is also applicable to other systems.

### Industrial Applicability

The present invention can appropriately detect an object to be detected by carrying out a detection process for the object according to the running state of the vehicle.

## Claims

1. An imaging system comprising:
an imaging device for taking an image of surroundings of a vehicle; and
a detection unit for detecting an object to be detected within the image taken by the imaging device by pattern matching, the detection unit carrying out the pattern matching from a farther side within the image when a vehicle speed exceeds a predetermined value than when not.

2. An imaging system according to claim 1, wherein the detection unit carries out the pattern matching by using a plurality of templates, the detection unit carrying out the pattern matching by using a far-side template for detecting a far side earlier when the vehicle speed exceeds the predetermined value than when not.

3. An imaging system according to claim 1 or 2, wherein the detection unit detects the object to be detected by pattern-matching a nearer side when the vehicle runs a curve than when not.

4. An imaging system according to one of claims 1 to 3, used for a vision aid system for aiding the vision of the driver when the vehicle runs at night.
